# EUROPÄISCHE PATENTSCHRIFT

(11) **EP 3 278 050 B1**
(45) Veröffentlichungstag und Bekanntmachung des Hinweises auf die Patenterteilung: **29.04.2020**
(21) Anmeldenummer: 16711159.0
(22) Anmeldetag: 07.03.2016
(51) Int. Cl.: F41G 3/32, G01B 11/27, G02B 23/00

(54) **SYSTEM ZUR JUSTIERUNG DER SICHTACHSEN EINES GEFECHTSFAHRZEUGS SOWIE VERFAHREN DAZU**
SYSTEM FOR FINE-ADJUSTING THE SIGHT AXES OF A COMBAT VEHICLE, AND METHOD THEREFOR
SYSTÈME SERVANT À AJUSTER LES AXES DE VUE D'UN VÉHICULE DE COMBAT ET PROCÉDÉ ASSOCIÉ

(30) Priorität: 31.03.2015 DE 102015205788
(43) Veröffentlichungstag der Anmeldung: 07.02.2018
(73) Patentinhaber: Rheinmetall Defence Electronics GmbH, 28309 Bremen (DE)
(72) Erfinder: HATTERMANN, Hans-Heinrich, 27327 Schwarme (DE); BERLING, Rudolf, 49661 Cloppenburg (DE); DAMJANIC, Marcin, 28325 Bremen (DE)
(74) Vertreter: Greif, Thomas
(86) Internationale Anmeldenummer: PCT/EP2016/054807
(87) Internationale Veröffentlichungsnummer: WO 2016/155982

(56) Entgegenhaltungen:
- DE-A1- 3 901 876
- FR-A1- 2 367 267
- US-A- 3 953 132
- US-A1- 2005 150 121

## Beschreibung

Die Erfindung betrifft Systeme zur Erfassung und/oder Justierung der Sichtachsen von Einrichtungen eines Gefechtsfahrzeugs sowie ein Verfahren dazu. Die Sichtachsen der Einrichtungen umfassen hierbei Achsen der Waffensysteme, Achsen der Sichtmittel sowie Achsen von Zusatzmitteln. Sichtmittel umfassen beispielsweise Kameras. Zusatzmittel umfassen beispielsweise Sensoren und/oder Entfernungsmesser. Solche Systeme werden benötigt, um bei Gefechtsfahrzeugen die Sichtachsen der Waffensysteme und/oder die Sichtachsen vorhandener Sichtmittel und/oder Zusatzmittel aufeinander abzustimmen, damit die Waffensysteme möglichst genau dahin zielen bzw. schießen, worauf sie und/oder das Sichtmittel ausgerichtet sind.

Eine Notwendigkeit für ein solches System zur Justierung der Sichtachsen ergibt sich bei jeder Art von Gefechtsfahrzeugen, die mindestens einen drehbaren Antrieb aufweisen, beispielsweise ein Waffensystem, sowie Waffenplattformen, Plattformen mit Sichtmitteln (Tag-/Nachtsicht). Eine Justierung ist des Weiteren notwendig, um sicherzustellen, dass die gewünschte Drehung auch tatsächlich um genau den gewünschten Winkel geschieht. Da häufig Sichtmittel, durch die das Ziel anvisiert wird, nicht zusammen mit dem Waffensystem, sondern unabhängig davon gedreht werden, muss ebenfalls eine Abstimmung zweier oder mehrerer Drehsysteme aufeinander geschehen. Dies ist ebenso nötig, wenn das Sichtmittel nicht drehbar gelagert ist, aber sich an einer anderen Position im Gefechtsfahrzeug befindet als das Waffensystem.

Ein solches Gefechtsfahrzeug ist beispielsweise in der DE 10 2012 102 235 B3 gezeigt. Bei diesem Gefechtsfahrzeug kann ein Turm mit einem Waffenrohr als Waffensystem gedreht werden und unabhängig davon kann ein Sichtgerät auf dem Turm als Sichtmittel gedreht werden. Als zusätzliches Sichtmittel ist in einer Ausrüstungsaufnahme noch ein weiterer Ausrüstungsgegenstand drehbar gelagert. Diese Drehungen der Sichtmittel und des Ausrüstungsgegenstandes müssen so auf die Seelenachse des Waffenrohres ausgerichtet sein, dass das anvisierte Ziel durch die Sichtmittel erfasst und unter Berücksichtigung der Ballistik von der Munition, die aus dem Waffenrohr abgefeuert wird, getroffen wird.

Weiterhin offenbart das Dokument US 2005150121 A1 ein existierendes System zur Kalibrierung des Waffenrohrs eines Gefechtsfahrzeugs.

Aufgabe der vorliegenden Erfindung ist es somit, eine Erfassung und/oder Justierung der Sichtachsen von Einrichtungen des Gefechtsfahrzeugs bereitzustellen, bei welcher die vorhandenen Waffenrohre und/oder entsprechende Sichtmittel ausgerichtet werden. Ebenso sollten die Sichtachsen von Zusatzmitteln ausrichtbar sein. Dabei wird die angefahrene Position einer Sichtachse auf ihre Genauigkeit überprüft.

Diese Aufgabe wird mittels eines Systems und dazugehörigen Verfahrens aus den Ansprüchen 1 und 10 gelöst, wobei das System und das Verfahren jeweils eine Vorrichtung verwenden.

Zur Lösung der oben genannten Aufgabe schlägt die vorliegende Erfindung eine Vorrichtung zur optischen Ausrichtung an einem reflektierenden Objekt vor, wobei die Vorrichtung einen Kollimator besitzt, welcher parallel verlaufende elektromagnetische Strahlen aussenden kann. Ebenso besitzt die erfindungsgemäße Vorrichtung einen auslesbaren Sensor und ein Teleskop, welche in der gleichen Sichtachse angeordnet sind wie der Kollimator.

Dieser Sensor sowie das Teleskop können somit einfallende elektromagnetische Strahlen detektieren, sei es von einer externen Strahlungsquelle, beispielsweise eines Lasers, oder die reflektierten Strahlen des Kollimators. Ebenso kann der Sensor den Einfallswinkel der Strahlen detektieren.

In einer bevorzugten Ausführungsform ist eine Wärmequelle in der Vorrichtung vorgesehen, mittels welcher das Teleskop ebenfalls elektromagnetische Wellen aussenden kann. Diese verlaufen durch die Anordnung des Teleskops zum Kollimator parallel zu den Strahlen des Kollimators und können durch Sichtmittel am Gefechtsfahrzeug detektiert werden. Dadurch ist eine Ausrichtung der Sichtmittel auf den Strahl des Teleskops möglich.

Mittels des Teleskops können die einfallenden Strahlen auf ein Ziel abgebildet werden. Das Ziel kann die einfallenden Strahlen auch reflektieren, sodass das Teleskop elektromagnetische Strahlen, die vom Ziel reflektiert werden, wieder parallel zu den einfallenden Strahlen aussenden (zurücksenden) kann. Diese Strahlen können beispielsweise in ein Sichtmittel und/oder Zusatzmittel am Fahrzeug projiziert werden, wodurch ebenfalls eine Ausrichtung des Sichtmittels und/oder des Zusatzmittels auf den reflektierten Strahl möglich ist.

Werden nun die elektromagnetischen Strahlen, die von dem Kollimator ausgesendet werden, an einem geeigneten Objekt reflektiert, werden diese reflektierten Strahlen bei Einfall in den Sensor detektiert sowie der Einfallswinkel der Strahlen festgestellt. Durch die Detektion des Einfallswinkels der Strahlen kann festgestellt werden, ob die Oberfläche des reflektierenden Objekts parallel zur Austrittsebene des Kollimators steht, denn nur dann verlaufen die austretenden Strahlen und die einfallenden Strahlen parallel zueinander.

Zusätzlich zu den oben genannten Merkmalen besteht die erfindungsgemäße Vorrichtung aus einer Messeinheit, welche die aktuelle Ausrichtung der Vorrichtung im Raum vermessen kann. Solche Messeinheiten bedienen sich Sensoren, welche Beschleunigungen und Drehraten der Vorrichtung messen können. Durch Kombination mehrerer solcher Sensoren entsteht die genannte Messeinheit. Nach Initialisierung in einer Referenz-Ausrichtung zeigt diese Messeinheit immer die aktuelle Ausrichtung im Raum in Relation zur Referenz-Ausrichtung an.

In einem bevorzugten Ausführungsbeispiel sind die ausgestrahlten und dementsprechend auch die einfallenden elektromagnetischen Strahlen als Licht im sichtbaren Bereich und/oder im Infrarotbereich ausgeführt. Dies dient der optischen Kontrolle der Strahlen, da sie dann vom Auge wahrgenommen und/oder von einem Infrarotsensor detektiert werden können. Die von der Wärmequelle durch das Teleskop ausgesendeten Strahlen können beispielsweise von Sichtgeräten, wie Wärmebildgeräten, empfangen werden.

Der Sensor ist auslesbar gestaltet und verfügt in einer bevorzugten Ausführungsform über mindestens eine Schnittstelle, durch welche die Messdaten des Sensors und somit insbesondere Stärke, Wellenlänge und/oder Einfallswinkel der Strahlen auslesbar und an der Schnittstelle bereitstellbar sind. Diese Auslesung kann analog und/oder digital geschehen. Dadurch können Messgeräte oder Computer an der Schnittstelle angeschlossen werden, um die Messdaten zu visualisieren.

Dem Kollimator kann in einem weiteren Ausführungsbeispiel ein Laser zugeordnet sein, der parallel zur Abstrahlrichtung des Kollimators angeordnet ist. Dieser kann zu einer ersten Ausrichtung auf das reflektierende Objekt benutzt werden, da hierdurch eine zunächst erste (grobe) manuelle Ausrichtung des Sensors sowie des Kollimators auf die Referenz erleichtert wird. Ist dann das reflektierende Objekt durch den Laserstrahl erfasst worden, erfolgt eine zweite Ausrichtung als Feinjustierung durch die elektromagnetischen Strahlen des Kollimators.

Der Laser kann ebenfalls als Laserentfernungsmesser ausgeführt sein, um die Entfernung von der Vorrichtung zum Auftreffpunkt des Lasers, also dem reflektierenden Objekt, zu messen. Als Laserentfernungsmesser kann hierzu der voran genannte Laser benutzt werden, aber auch ein weiterer zusätzlicher Laser. Zusammen mit der Messeinheit kann durch die Entfernungsmessung genau festgestellt werden, an welcher Position im Raum das reflektierende Objekt sich befindet.

Zur Erfassung und/oder Justierung der Sichtachsen von den Einrichtungen eines Gefechtsfahrzeugs wird nun ein System vorgeschlagen, welches eine oben genannte Vorrichtung verwendet. Dazu umfasst das System einen Roboter, welcher die Vorrichtung an einem seiner Arme trägt. Dieser Roboter ist so konzipiert, dass er entlang einer Linie verfahrbar ist und so viele Achsen besitzt, dass die Vorrichtung in alle Freiheitsgrade verfahren werden kann. Vorzugsweise weist der Roboter hierzu sechs Achsen auf, um in alle Freiheitsgrade verfahren zu können.

Das System besteht weiterhin aus einem Gefechtsfahrzeug mit den Einrichtungen, deren Sichtachsen justiert werden sollen. Die Messeinheit, die die Vorrichtung enthält, kann die aktuelle Position der Vorrichtung im Raum bestimmen. Um dies zu können, muss jedoch zunächst ein Referenzpunkt im Raum festgelegt werden, an welchem sich dann die Messeinheit orientieren kann. Bei üblichen Systemen zur Justierung der Sichtachsen der Einrichtungen eines Gefechtsfahrzeugs wird dazu das Gefechtsfahrzeug an einer Justierwand und/oder in einer festgelegten Position ausgerichtet, damit vorgegeben ist, wo im Raum das Gefechtsfahrzeug sich befindet. Der Referenzpunkt des Messsystems ist dann auf einen vordefinierten Punkt im Raum festgelegt.

Diese Ausrichtung des Gefechtsfahrzeugs und/oder der Justierwand ist jedoch aufwendig und langwierig, da eine möglichst genaue Positionierung stattfinden muss, um auch die Justierung genau ausführen zu können. Diese möglichst genaue Ausrichtung soll nach der vorgenannten Erfindung entfallen.

Um das vorliegende System auf einen Referenzpunkt auszurichten, besitzt das Gefechtsfahrzeug einen Referenzspiegel, welcher in Richtung Roboter zeigt. Dies bedeutet, dass das Gefechtsfahrzeug mit der Seite zum Roboter ausgerichtet wird, an der sich der Referenzspiegel befindet. Die genaue Einhaltung der Richtung ist hierbei unwesentlich. Der Kollimator an der Vorrichtung wird nur mit Hilfe des Roboters so verfahren, dass zumindest ein Teil der ausgesendeten Strahlen des Kollimators durch Reflektion am Referenzspiegel auf den Sensor zurückreflektiert wird. Damit ist dann die Position des Referenzspiegels an dem Gefechtsfahrzeug erfasst.

Die Feinjustierung geschieht danach dadurch, dass durch die Einfallswinkel in Elevation und Azimut die Vorrichtung durch den Roboter so lange verfahren wird, bis die Sichtachse des Kollimators und des Sensors genau orthogonal zum Referenzspiegel positioniert ist. Die axiale Drehung der Vorrichtung zur Fahrzeuglängsachse kann dabei durch mindestens einen Neigesensor, welcher auf eine elektrische Waage an einer Referenzfläche am Gefechtsfahrzeug ausgerichtet wird, bestimmt werden. Hierbei wird dann die Vorrichtung vom Roboter so um die Sichtachse des Kollimators und des Sensors gedreht, dass die Vorrichtung und der Fahrzeugreferenzpunkt am Gefechtsfahrzeug zueinander in der Fahrzeuglängsachse ausgerichtet sind.

In einem bevorzugten Ausführungsbeispiel besitzt die Vorrichtung einen zusätzlichen Laser, über welchen die erste Ausrichtung zum Referenzspiegel geschieht. Da der Laser lichtintensiver ist als die ausgesendeten Strahlen des Kollimators und somit vom Sensor einfacher erfasst wird, ist es möglich, den Roboter schneller zu verfahren, um die manuelle Positionierung zum Referenzspiegel zu erreichen als über die ausgesendeten Strahlen des Kollimators alleine. In dieser bevorzugten Ausführungsform wird dann zunächst über Aussendung des Laserstrahls eine manuelle Positionierung vorgenommen und danach über den Einfallswinkel der ausgesendeten Kollimatorstrahlen die Feinjustierung durchgeführt.

Wenn bei dieser Ausführungsform der Laser als Laserentfernungsmesser ausgeführt ist oder ein zusätzlicher Laserentfernungsmesser verwendet wird, kann die genaue Entfernung zum Referenzspiegel und somit zum justierenden Gefechtsfahrzeug festgestellt werden.

Durch die Positionierung am Referenzspielgel sowie die Entfernungsmessung dazu kann ein genauer Punkt und die Richtung im Raum für den Roboter als Referenz definiert werden, von wo aus alle anderen Positionierungen im Raum durch das Messsystem geschehen. Die Ausrichtung der Vorrichtung durch den Roboter ist von dieser Referenz aus auf jeder Position am Fahrzeug bestimmbar.

Zur Justierung der Sichtachse des Waffenrohrs wird in das Waffenrohr eine Passstange eingeführt, die genau in Schussrichtung des Waffenrohrs liegt. An dieser Passstange ist ein Richtspiegel angebracht, welcher parallel zur Schussrichtung des Waffenrohres durch die Passstange ausgerichtet ist.

Der Roboter wird nun die Vorrichtung auf den Richtspiegel ausrichten, um die genaue Position und Lage des Waffenrohres zu erfassen. Die Messung und Ausrichtung am Richtspiegel kann dabei genauso geschehen, wie die Ausrichtung am Referenzspiegel.

In einer bevorzugten Ausführungsform ist der Richtspiegel in entgegengesetzter Richtung in Bezug auf die Schussrichtung des Waffenrohres angebracht, damit eine Gleichlauf- und Lotablaufprüfung durchgeführt werden kann. Um die Ausrichtung des Richtspiegels am Waffenrohr festzustellen, wird die Vorrichtung am Roboter um 180° in der Längsachse gedreht, so dass Kollimator und Sensor der Vorrichtung nun nicht mehr in Richtung des Referenzspiegels ausgerichtet sind, sondern in entgegengesetzter Richtung. Hierdurch werden große Armlängen des Roboters vermieden, da die Vorrichtung nicht mehr vor der Waffe positioniert werden muss, sondern in der Nähe zu den Sichtmitteln und/oder zur Waffenachse justiert werden kann.

Das System kann weiterhin aus mindestens einem Sichtmittel bestehen, welches so justiert werden soll, dass es auf das Gefechtsrohr ausgerichtet ist. Das Sichtmittel muss so justiert werden, dass die vom Sichtmittel wahrgenommenen Ziele vom Waffenrohr unter Berücksichtigung der Ballistik bestmöglich getroffen werden.

Zur Justierung der Sichtachse des Sichtmittels wird durch den Roboter die Vorrichtung parallel zum Referenzspiegel so verfahren, dass die vom Kollimator und/oder des Teleskops ausgesandte bzw. durchgeführte Strahlung das Sichtmittel trifft. Das Verfahren parallel zum Referenzspiegel bedeutet, dass parallel zur Ebene des Referenzspiegels verfahren wird, jedoch auch in unterschiedlichen Höhen. Dies geschieht, da Sichtgeräte zwar oft in unterschiedlichen Höhen zum Waffenrohr angebracht sein können, jedoch nicht zwingend die gleiche Drehachse wie das Waffenrohr besitzen bzw. versetzt davon angebracht sein können.

In einer besonderen Ausführungsform ist eine Kamera vorgesehen, welche die Projektion von ausgesendeten Strahlen aufnimmt, die beispielsweise von Zusatzmitteln, wie Laserentfernungsmessern, zur Justierung ihrer Sichtachsen ausgestrahlt werden. Die aufgenommenen Größen werden über eine Datenschnittstelle bereitstellt. Endgeräte wie Sichtbildschirme, Computer oder andere Anzeigen können dann das von der Kamera aufgezeichnete Bild anzeigen und davon abhängig kann die Justierung der Sichtmittel geschehen.

In einem weiteren bevorzugten Ausführungsbeispiel kann die Kamera auch in der Vorrichtung positioniert sein. Die Kamera nimmt dann ggf. unter Verwendung optischer Fokussiermittel das auf das Ziel einfallende Bild in der Vorrichtung auf. Dieses kann das gleiche Bild sein, welches auch vom Sensor erfasst wird.

Zur genauen Positionierung und Justierung der Sichtmittel und/oder der Zusatzmittel ist es hilfreich, wenn die ausgesendeten Strahlen des Kollimators und/oder des Teleskops ein Bild zur Positionierhilfe bilden. Dies kann ein Zielkreuz, ein einfacher Punkt oder dergleichen sein.

Mit diesem System ist es also möglich, ein Verfahren zur Justierung der Sichtachsen eines Gefechtsfahrzeugs bereitzustellen. Hierbei wird dann, wie bereits beschrieben, zunächst die Vorrichtung über den Roboter auf den Referenzspiegel ausgerichtet, um dem Roboter eine Referenzposition im Raum zu ermöglichen, damit anschließende Messungen durch das Messsystem ausführbar sind.

Hierbei wird der Roboter so verfahren, dass die Vorrichtung auf den Richtspiegel, welcher am Waffenrohr befestigt ist, ausgerichtet wird. Dadurch wird die Lage des Waffenrohres im Raum bestimmt.

Die Bestimmung der Lage des Waffenrohres geschieht normalerweise in der Ausrichtung eines mechanischen Referenzpunktes in Azimut und in waagerechter Stellung, also ohne Anhebung des Waffenrohres in Elevationsrichtung. Hierdurch können die mechanischen Nullpunkte justiert werden. Durch das System zur Justierung bzw. das oben genannte Verfahren ist es aber ebenso möglich, die Position des Rohres in jeder beliebigen anderen Richtung festzustellen. Durch die Detektion der einfallenden Strahlen im Sensor wird die genaue Ausrichtung des Waffenrohres im Raum festgestellt.

Nach Erfassung der Lage des Waffenrohres wird die Vorrichtung durch den Roboter orthogonal zur Ebene des Richtspiegels so verfahren, dass die vom Kollimator und/oder Teleskop ausgesandten Strahlen in die Sichtachse des Sichtmittels ausgestrahlt werden. Durch Projizierung der vom Ziel emittierten elektromagnetischen Strahlen in das Sichtmittel wird die Abweichung der Elevation und des Azimut des Sichtmittels zum projizierten Ziel bestimmt. Hierdurch kann beispielsweise eine Gleichlaufprüfung durch Auswertung der Elevationsablagewerte sowie ein Lotablauf durch Auswertung der Azimutablagewerte realisiert werden, um festzustellen, ob das mechanische Anfahren einzelner Waffenpositionen eine Abweichung zu den Sichtachsen ergibt oder nicht.

Der Sensor ist vorzugsweise in der gleichen Sichtachse des Kollimators angebracht. Es kann jedoch vorkommen, dass Ungenauigkeiten im Sensor dadurch entstehen, dass Sensor und Kollimator nicht genau auf die Sichtachse ausgerichtet sind. Dies kann beispielsweise durch eine langzeitige Verwendung der Vorrichtung geschehen, aber auch bei erstmaliger Verwendung.

Um Ungenauigkeiten in der Vorrichtung entgegenzuwirken, kann durch Verwendung eines Justierspiegels, zum Beispiel eines Retroreflektors, die Parallelität der Sichtachsen von Kollimator, Sensor und/oder Teleskop justiert werden. Der Justierspiegel bewirkt dabei, dass die ausgesendeten Strahlen des Kollimators immer genau parallel als einfallende Strahlen wieder auf den Sensor und/oder das Teleskop zurückgeschickt werden. Sendet der Kollimator dabei ein Bild aus, beispielsweise ein Kreuz, wird dieses dabei auf das Ziel des Teleskops ausgerichtet.

Weitere Merkmale der vorliegenden Erfindung ergeben sich aus den beigefügten Zeichnungen.

Es zeigen:
Figur 1: Schematischer Aufbau einer Vorrichtung des erfindungsgemäßen Systems unter Verwendung eines Tripelspiegels als Justierspiegel,
Figur 2: Schematischer Aufbau eines erfindungsgemäßen Systems zur Durchführung des erfindungsgemäßen Verfahrens.
Figur 3: Schematischer Aufbau eines erfindungsgemäßen Systems zur Durchführung des erfindungsgemäßen Verfahrens mit einem auszurichtenden Laserentfernungsmesser am Fahrzeug.
Figur 4: Schematischer Aufbau eines erfindungsgemäßen Systems zur Durchführung des erfindungsgemäßen Verfahrens mit einem Wärmebildgerät als auszurichtendes Sichtmittel.

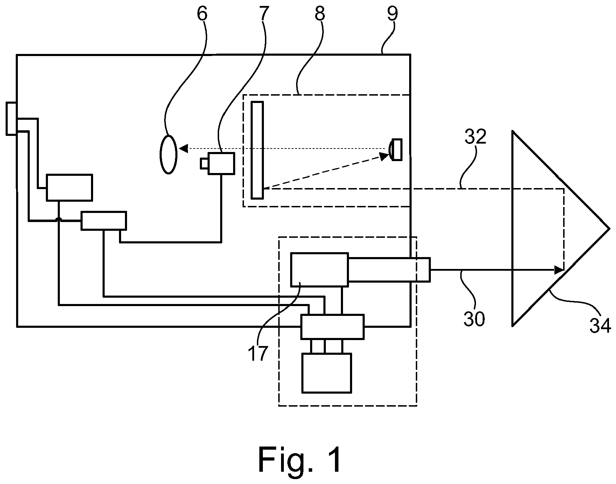

Figur 1 zeigt die Vorrichtung 9 des erfindungsgemäßen Systems als schematische Darstellung. Die Vorrichtung 9 besteht hierbei aus einem Gehäuse, in welchem ein Kollimator mit Sensor 17 untergebracht ist, welcher dafür sorgt, dass elektromagnetische Strahlen parallel zueinander ausgestrahlt werden. Kollimator mit Sensor 17 bilden eine Baueinheit, können aber auch separat ausgeführt sein.

Der Sensor ist als digital auslesbar Sensor ausgeführt, welcher den Winkel der einfallenden Strahlen feststellen kann. Die ausgesendeten Strahlen des Kollimators können dabei ein beliebiges Bild darstellen.

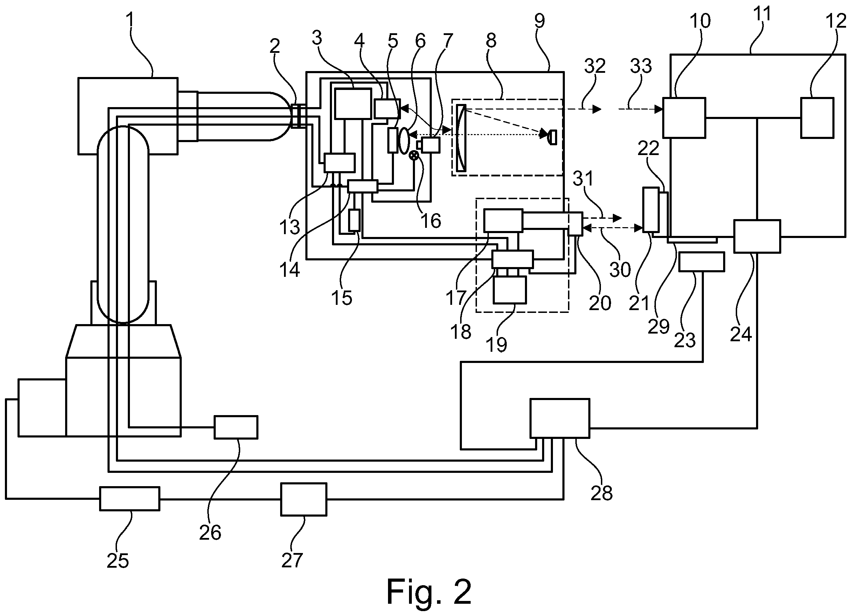

In Figur 1 kann ebenso ein zusätzlicher Laser 20, wie in Figur 2 zu sehen ist, vorgesehen sein, welcher parallel zur Richtung der ausgesendeten Strahlen 30 des Kollimators mit Sensor 17 abstrahlt. Dieser Laser 20 kann zur Grobausrichtung der Vorrichtung 9 verwendet werden, da der ausgesendete Laserstrahl 31 sichtbar ist gegenüber den ausgesendeten Strahlen 30 des Kollimators 17, welche nicht zwingend sichtbar sind.

Ein Justierspiegel 34 ist gezeigt, auf welchen die ausgesendeten Strahlen 30 des Kollimators 17 sowie des Lasers 20 treffen. Diese werden bei korrekter Positionierung von dem Justierspiegel 34 reflektiert und wieder in Richtung der Vorrichtung 9 zurückgeworfen. Die einfallenden Strahlen können vom Sensor des Kollimators 17 erfasst werden (nicht in Figur 1 gezeigt) sowie als einfallende Strahlen 32 von einem Teleskop 8 eingefangen werden.

Das Teleskop 8 kann hierbei Fokussiermittel beinhalten oder einfache Spiegel. Hierdurch ist es möglich, die durch das Teleskop 8 einfallenden Strahlen 32 auf ein Ziel 6 zu lenken. Dies kann dann durch eine geeignete Kamera 7 beobachtet werden. Zur besseren Bilderkennung kann in der Vorrichtung 9 weiterhin eine Beleuchtung 16 vorgesehen sein. Eine eventuelle Neigung des Gefechtsfahrzeugs 11 kann durch Ausrichtung an einer elektronischen Waage 23 festgestellt werden, vorzugsweise unter Zuhilfenahme einer Referenzfläche 29 am Gefechtsfahrzeug 11.

Figur 2 zeigt ein erfindungsgemäßes System, wobei nochmals die erfindungsgemäße Vorrichtung 9 zu sehen ist mit dem Kollimator mit Sensor 17 sowie dem Teleskop 8. Ebenso ist hier noch ein zusätzlicher Laser 20 angebracht. Dargestellt ist hierbei ein Referenzspiegel 21, der als planer Spiegel ausgeführt ist. Die vom Kollimator 17 ausgesendeten Strahlen 30 werden am Referenzspiegel 21 reflektiert und zur Vorrichtung 9 als einfallende Strahlen zurückgeworfen.

Die Vorrichtung 9 besitzt eine Schnittstelle 18, um Messdaten des Sensors bereitzustellen und/oder nutzt eine Datenverbindung um die Messdaten auf einem Computer 28 darzustellen. Über einen Schnittstellenwandler 13 können hierzu die Messdaten für beliebige Schnittstellen gewandelt werden. Ebenso besitzt die Kamera 7 eine Datenschnittstelle, um das empfangene Bild bereitzustellen. Ist die Kamera 7 in der Vorrichtung 9 angeordnet, können die Datenschnittstelle der Kamera 7 sowie die Schnittstelle 18 auch als eine gemeinsame Schnittstelle ausgeführt sein. Über die jeweilige Schnittstelle können dann mit geeigneten Endgeräten, wie beispielsweise einer Anzeigeeinheit 19 und/oder einem Computer 28, die Daten des Sensors bzw. der Kamera 7 ausgelesen werden.

Figur 2 zeigt ebenso einen Roboter 1, der die Vorrichtung 9 an einem seiner Arme an einem Flansch 2 trägt. Dieser Roboter 1 ist vorzugsweise auf einer Schiene geführt (nicht dargestellt), so dass er entlang einer Linie verfahrbar ist. Durch die Ausführung des Roboters 1 und der Anzahl seiner Achsen kann der Roboter 1 die Vorrichtung 9 in allen Freiheitsgraden bewegen und verfahren. Zur Steuerung besitzt der Roboter 1 eine Robotersteuerung 25 und eine Energieeinspeisung 26. Über eine Schnittstelle 27 des Roboters 1 kann eine Überwachung und/oder externe Steuerung realisiert werden.

Ebenso in Figur 2 zu sehen ist ein Gefechtsfahrzeug 11 mit Sichtmitteln 10, deren Sichtachse justiert werden soll. Das Waffenrohr des Gefechtsfahrzeugs ist nicht gezeigt. Das Gefechtsfahrzeug 11 ist hier parallel zur Vorrichtung 9 gezeigt. Dies muss in der Ausgangsposition, bevor die Ausrichtung auf den Referenzspiegel 21 geschehen ist, jedoch nicht der Fall sein. Das Gefechtsfahrzeug 11 wird in die Nähe des Roboters 1 gefahren, aber nicht zum Roboter 1 ausgerichtet, um das erfindungsgemäße Verfahren durchzuführen. Dies ist ein besonderer Vorteil gegenüber dem bisherigen Verfahren des Stands der Technik, bei der das Fahrzeug zur Vorrichtung ausgerichtet sein musste.

Die Steuerung der Sichtachsen der Einrichtungen des Gefechtsfahrzeugs 11, also des Waffenrohres sowie der Sichtmittel 10, ggf. auch der Zusatzmittel, erfolgt über eine Fahrzeugsteuerung 12 des Gefechtsfahrzeugs 11, welche auch als externer Computer 28 ausgeführt sein kann. Zur Anbindung eines externen Computers 28 an das Gefechtsfahrzeug 12 ist eine Schnittstelle 24 am Gefechtsfahrzeug 12 vorgesehen.

Die Anbindung der einzelnen externen Geräte an die erfindungsgemäße Vorrichtung 9 bzw. das Gefechtsfahrzeug 11 kann über kabelgebundene Datenzuführungen (wie USB) oder Bussysteme (wie beispielsweise einem CAN-Bus) ausgeführt sein. Es sind aber auch drahtlose Übertragungsmittel denkbar, wie zum Beispiel WLAN oder GSM.

Bei der Ausrichtung des Waffenrohres ist ein Richtspiegel 22 vorgesehen. Dazu wird in die Seelenachse des Waffenrohres eine Passstange eingeführt, an welcher der Richtspiegel 22 angebracht ist.

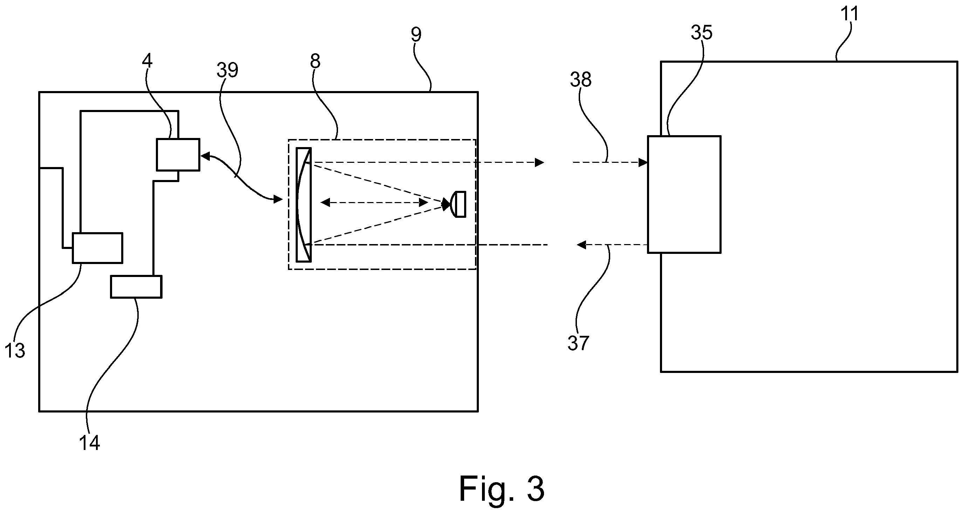

Figur 3 zeigt eine Systemanordnung mit der vorgenannten Vorrichtung 9 zur Ausrichtung der Sichtachse eines Zusatzmittels am Gefechtsfahrzeug 11. Das Zusatzmittel ist hierbei als Laserentfernungsmesser 35 ausgeführt, welcher Strahlen 37 vom Gefechtsfahrzeug 12 aussendet. Zur Ausrichtung des Zusatzmittels wird das Teleskop 8 der Vorrichtung 9 nach Ausrichtung am Referenzspiegel 21 vor das Zusatzmittel verfahren, sodass die Strahlen 37 des Laserentfernungsmessers 35 in das Teleskop 8 einfallen. Nach Durchlauf des Strahlenweges im Projektor 8 werden diese Strahlen als aus dem Projektor austretenden Strahlen 38 wieder zum Zusatzgerät zurückgeworfen. Durch einen elektronischen Entfernungssimulator 4 kann der Laserentfernungsmesser 35 auf eine definierte Entfernung kalibriert werden. Der Entfernungssimulator 4 ist hierzu über einen Lichtleiter 39 mit dem Teleskop 8 verbunden.

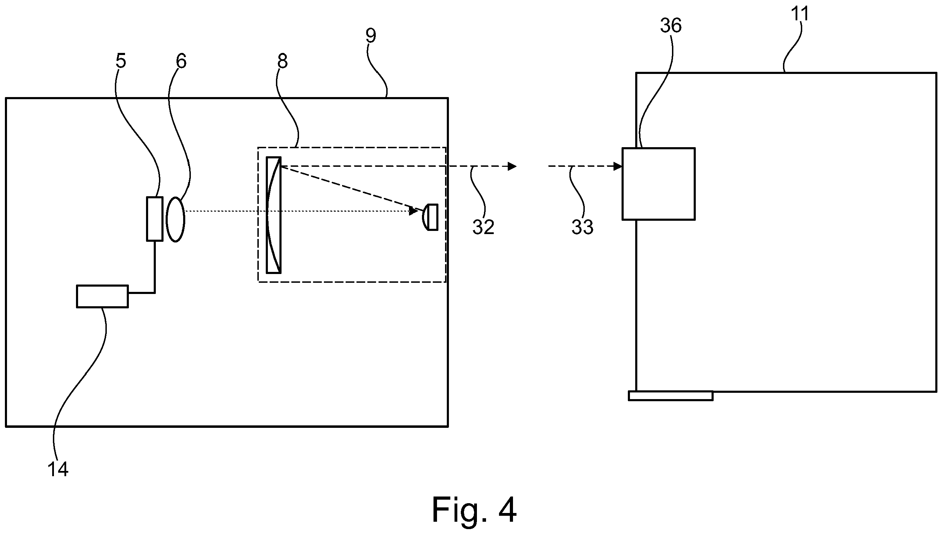

Figur 4 zeigt eine Systemanordnung mit der vorgenannten Vorrichtung 9 zur Ausrichtung der Sichtachse eines Sichtmittels 10 am Gefechtsfahrzeug 11. Das Sichtmittel 10 ist hierbei als Wärmebildgerät 36 ausgeführt. Die Vorrichtung 9 umfasst dazu eine Wärmequelle 5, welche elektromagnetische Strahlung 32 mittels des Teleskops 8 parallel zu den Strahlen 30 des Kollimators 17 ausstrahlt. Diese Strahlen 32 können dann als einfallende Strahlen 33 des Sichtmittels 10 von dem Wärmebildgerät 36 ausgewertet und dazu verwendet werden, das Sichtmittel 10 auszurichten.

Vorstehend ist mit der Bezugsziffer 17 der Kollimator mit zugeordnetem Sensor bezeichnet, die vorzugsweise eine Baueinheit bilden oder voneinander separate Elemente sind. Je nach Zusammenhang kann mit der Bezugsziffer 17 somit in der Beschreibung und in den Patentansprüchen nur der Kollimator, nur der Sensor oder auch die Einheit von beiden bezeichnet sein.

Die vorliegende Erfindung ist nicht auf die Merkmale in der Beschreibung bzw. den Zeichnungen beschränkt. Vielmehr sind weitere Ausgestaltungen denkbar. So kann die Kamera eine reine Infrarotkamera sein, wenn Infrarotstrahlen ausgesendet werden. Dies kann dabei helfen, die Detektion der einfallenden Strahlen unabhängig vom sichtbaren Umgebungslicht zu gestalten. Ebenso kann die Kamera nicht in der Vorrichtung angeordnet sein, sondern extern im Raum angeordnet sein, um die passende Sichtachse zu beobachten. Außerdem ist es denkbar, den Richtspiegel nicht am Waffenrohr über eine Passstange im Waffenrohr zu befestigen, sondern am Rohr selber, beispielsweise über geeignete Befestigungsmittel. Zudem kann die Messeinheit als inertiale Messeinheit (Inertial Reference Unit, Kreiselsystem) ausgeführt sein, wobei die inertiale Messeinheit als Kombination mehrerer Inertialsensoren ausgeführt ist. Dies kann mit zusätzlichen Beschleunigungsaufnehmern und/oder mindestens einem Kompass kombiniert werden.

Mit dem erfindungsgemäßen System und Verfahren ist es also in vorteilhafter Weise möglich, die Ausrichtung der zumindest einen Sichtachse der Sichtmittel sowie der Rohrseelenachse der Waffe zunächst zu erfassen. Weichen diese Achsen voneinander ab, kann eine Justierung derart erfolgen, dass die Achsen in eine definierte Ausrichtung zueinander (zum Beispiel parallel oder in einem sehr spitzen Winkel zueinander) gebracht werden. Die Justierungen können an dem Sichtmittel, dem Zusatzmittel und/oder der Waffe mechanisch erfolgen. Es ist auch denkbar, eine erfasste Abweichung der Achsen mechanisch zu belassen und diese Abweichung bei der Ausrichtung der Waffe auf das mittels des Sichtmittels erfasste Ziel zu berücksichtigen bzw. zu korrigieren.

### Bezugszeichenliste

- 1: Roboter
- 2: Flansch
- 3: Messeinheit
- 4: Entfernungssimulator
- 5: Wärmequelle
- 6: Ziel
- 7: Kamera
- 8: Teleskop
- 9: Vorrichtung
- 10: Sichtmittel
- 11: Gefechtsfahrzeug
- 12: Fahrzeugsteuerung
- 13: Schnittstellenwandler
- 14: Spannungsversorgung
- 15: Neigesensor
- 16: Beleuchtung
- 17: Kollimator mit Sensor
- 18: Schnittstelle der Vorrichtung
- 19: Anzeigeeinheit
- 20: Laser
- 21: Referenzspiegel
- 22: Richtspiegel
- 23: Waage
- 24: Schnittstelle des Fahrzeugs
- 25: Robotersteuerung
- 26: Energieeinspeisung
- 27: Schnittstelle des Roboters
- 28: Computer
- 29: Referenzfläche
- 30: Strahlen des Kollimators
- 31: Strahlen des Lasers
- 32: Strahlen des Teleskops
- 33: Strahlen des Sichtmittels
- 34: Justierspiegel
- 35: Laserentfernungsmesser
- 36: Wärmebildgerät
- 37: Strahlen des Laserentfernungsmessers
- 38: Strahlen des Laserentfernungsmessers
- 39: Lichtleiter

## Patentansprüche

1. System zur Erfassung und/oder Justierung der Sichtachsen eines Gefechtsfahrzeugs (11), mit einer Vorrichtung (9) zur optischen Ausrichtung an reflektierenden Objekten, wobei die Vorrichtung umfasst:
einen Kollimator (17), welcher elektromagnetische Strahlen (30) aussendet,
einen Sensor, welcher in der gleichen Sichtachse angeordnet ist wie der Kollimator (17), wobei der Sensor einfallende elektromagnetische Strahlen (30) sowie den Einfallwinkel der einfallenden Strahlen (30) detektiert,
und eine Messeinheit (3),
und wobei ein Referenzspiegel (21) vorgesehen ist, welcher am Gefechtsfahrzeug (11) angeordnet ist,
und mindestens ein Waffenrohr des Gefechtsfahrzeugs (11) vorgesehen ist, wobei jedem Waffenrohr
ein Richtspiegel (22) zugeordnet ist, welcher parallel zur Schussrichtung des Waffenrohres ausgerichtet ist,
**dadurch gekennzeichnet, dass**
die Messeinheit zur Vermessung der aktuellen Position der Vorrichtung im Raum ausgeführt ist,
dass ein Roboter (1) im System vorgesehen ist, welcher die Vorrichtung (9) an einem seiner Arme trägt,
dass zunächst die Vorrichtung (9) über den Roboter (1) auf den Referenzspiegel (21) ausgerichtet wird und der Roboter dadurch eine Referenzposition im Raum erhält,
und dass der Referenzspiegel (21) in Richtung des Roboters (1) zeigt,
wobei dann der Roboter (1) so verfahren wird, dass die Vorrichtung (9) auf den Richtspiegel (22) ausgerichtet ist und dadurch die Lage des Waffenrohres zum Referenzspiegel (21) bestimmt wird.

2. System nach Anspruch 1, **dadurch gekennzeichnet, dass** die ausgesendeten sowie die einfallenden elektromagnetischen Strahlen (30) als Licht im sichtbaren Bereich und/oder im Infrarotbereich ausgeführt sind.

3. System nach Anspruch 1 oder 2, **dadurch gekennzeichnet, dass** der Sensor über mindestens eine Schnittstelle (18) verfügt, über welche Messdaten des Sensors analog und/oder digital auslesbar bereitgestellt werden.

4. System nach einem der Ansprüche 1 bis 3, **dadurch gekennzeichnet, dass** ein Teleskop (8) in der Vorrichtung vorgesehen ist, welches parallel zur Sichtachse des Kollimators (17) angeordnet ist und einfallende elektromagnetische Strahlung auf ein Ziel (6) projiziert.

5. System nach Anspruch 4, **dadurch gekennzeichnet, dass** eine Wärmequelle in der Vorrichtung (9) vorgesehen ist, welche eine elektromagnetische Strahlung (32) aussendet, welche durch das Teleskop parallel zu den vom Kollimator (17) ausgesendeten Strahlen (30) projiziert wird.

6. System nach einem der Ansprüche 1 bis 5, **dadurch gekennzeichnet, dass** ein Laser (20) vorgesehen ist, welcher parallel zur Abstrahlrichtung des Kollimators (17) angeordnet ist.

7. System nach Anspruch 6, **dadurch gekennzeichnet, dass** der Richtspiegel (22) in entgegengesetzter Richtung in Bezug auf die Schussrichtung des Waffenrohres reflektiert.

8. System nach einem der Ansprüche 1-7, **dadurch gekennzeichnet, dass** mindestens ein Sichtmittel (10) vorgesehen ist, welches so angeordnet ist, dass die Sichtlinie des Sichtmittels (33) mit mindestens einer Schussrichtung eines Waffenrohres parallel verläuft.

9. System nach Anspruch 8, **dadurch gekennzeichnet, dass** eine Kamera (7) vorgesehen ist, welche ein einfallendes Bild als Projektionen der ausgesendeten Strahlen (32) aufnimmt und über eine Schnittstelle (18) und/oder Schnittstellenwandler (13) einem Computer (28) bereitstellt.

10. Verfahren zur Erfassung und/oder Justierung der Sichtachsen eines Gefechtsfahrzeugs (11) mittels eines Systems nach einem der Ansprüche 1 bis 9,
**dadurch gekennzeichnet, dass** zunächst die Vorrichtung (9) über den Roboter (1) auf den Referenzspiegel (21) ausgerichtet wird und der Roboter dadurch eine Referenzposition im Raum erhält,
dann der Roboter (1) so verfahren wird, dass die Vorrichtung (9) auf den Richtspiegel (22) ausgerichtet ist
und dadurch eine Lage des Waffenrohres zum Referenzspiegel (21) bestimmt wird.

11. Verfahren nach Anspruch 10, **dadurch gekennzeichnet, dass** ein Teleskop (8) in der Vorrichtung vorgesehen ist und zusätzlich die Vorrichtung (9) parallel zur senkrechten Ebene des Referenzspiegels (21) so verfahren wird, dass vom Teleskop (8) ausgesendete Strahlen (32) in die Sichtachse des Sichtmittels (10) ausgestrahlt werden und damit die Lage des Sichtmittels (10) zum Referenzspiegel (21) bestimmt wird.

12. Verfahren nach Anspruch 10 oder 11, **dadurch gekennzeichnet, dass** die Entfernungen von der Vorrichtung (9) zum jeweiligen Messpunkt durch einen Laser-Entfernungsmesser gemessen werden.

13. Verfahren nach einem der Ansprüche 10 bis 12, **dadurch gekennzeichnet, dass** verschiedene Positionen des Waffenrohres angefahren werden und über Wiederholung des Verfahrens in jeder Position die Lage des Waffenrohres und des Sichtmittels (10) überprüft wird.

14. Verfahren nach einem der Ansprüche 10 bis 13, **dadurch gekennzeichnet, dass** eine Justiergenauigkeit des Sensors zum Kollimator (17) und zum Teleskop (8) durch Anbringung eines Justierlasers am Kollimator (17) sowie durch Reflektion an einem Justierspiegel überprüft wird.

## Claims

1. System for capturing and/or adjusting the sight axes of a combat vehicle (11), having an apparatus (9) for optical orientation towards reflective objects, wherein the apparatus comprises:
a collimator (17), which emits electromagnetic beams (30),
a sensor, which is arranged in the same sight axis as the collimator (17), wherein the sensor detects incident electromagnetic beams (30) and the angle of incidence of the incident beams (30),
and a measurement unit (3),
and wherein
a reference mirror (21) is provided, which is arranged on the combat vehicle (11),
and
at least one barrel of the combat vehicle (11) is provided, wherein each barrel is assigned a directing mirror (22) which is oriented parallel to the shooting direction of the barrel,
**characterized in that**
the measurement unit is designed for measuring the current position of the apparatus in space,
**in that** a robot (1), which carries the apparatus (9) on one of its arms, is provided in the system,
**in that** the apparatus (9) is initially oriented towards the reference mirror (21) via the robot (1) and the robot thereby obtains a reference position in space,
and **in that** the reference mirror (21) points in the direction of the robot (1),
wherein the robot (1) is then moved such that the apparatus (9) is oriented towards the directing mirror (22) and thereby the location of the barrel relative to the reference mirror (21) is determined.

2. System according to Claim 1, **characterized in that** the emitted and the incident electromagnetic beams (30) take the form of light in the visible range and/or in the infrared range.

3. System according to Claim 1 or 2, **characterized in that** the sensor has at least one interface (18) via which measurement data of the sensor are provided such that they are analogously and/or digitally readable.

4. System according to one of Claims 1 to 3, **characterized in that** a telescope (8) is provided in the apparatus, which telescope is arranged parallel to the sight axis of the collimator (17) and projects incident electromagnetic radiation onto a target (6).

5. System according to Claim 4, **characterized in that** a heat source is provided in the apparatus (9), which heat source emits electromagnetic radiation (32) that is projected through the telescope parallel to the beams (30) emitted by the collimator (17).

6. System according to one of Claims 1 to 5, **characterized in that** a laser (20) is provided, which is arranged parallel to the emission direction of the collimator (17).

7. System according to Claim 6, **characterized in that** the directing mirror (22) reflects in the opposite direction with respect to the shooting direction of the barrel.

8. System according to one of Claims 1-7, **characterized in that** at least one sight means (10) is provided, which is arranged such that the line of sight of the sight means (33) extends parallel to at least one shooting direction of a barrel.

9. System according to Claim 8, **characterized in that** a camera (7) is provided, which records an incident image in the form of projections of the emitted beams (32) and provides it to a computer (28) via an interface (18) and/or interface converter (13).

10. Method for capturing and/or adjusting sight axes of a combat vehicle (11) using a system according to one of Claims 1 to 9,
**characterized in that** the apparatus (9) is initially oriented towards the reference mirror (21) by the robot (1) and the robot thereby obtains a reference position in space,
the robot (1) is then moved such that the apparatus (9) is oriented towards the directing mirror (22) and thereby a location of the barrel relative to the reference mirror (21) is determined.

11. Method according to Claim 10, **characterized in that** a telescope (8) is provided in the apparatus and additionally the apparatus (9) is moved parallel to the perpendicular plane of the reference mirror (21) such that beams (32) emitted by the telescope (8) are emitted into the sight axis of the sight means (10) and thereby the location of the sight means (10) relative to the reference mirror (21) is determined.

12. Method according to Claim 10 or 11, **characterized in that** the distances of the apparatus (9) from the respective measurement point are measured by a laser range finder.

13. Method according to one of Claims 10 to 12, **characterized in that** different positions of the barrel are assumed and the location of the barrel and of the sight means (10) is checked by repeating the movement into each position.

14. Method according to one of Claims 10 to 13, **characterized in that** an adjustment accuracy of the sensor with respect to the collimator (17) and to the telescope (8) is checked by attaching an adjustment laser to the collimator (17) and by way of reflection at an adjustment mirror.

## Revendications

1. Système de détection et/ou d'ajustement des axes de vision d'un véhicule de combat (11), comprenant un dispositif (9) servant à l'orientation optique sur des objets réfléchissants, le dispositif comportant :
un collimateur (17), qui émet des rayons électromagnétiques (30),
un capteur, qui est disposé dans le même axe de vision que le collimateur (17), le capteur détectant des rayons électromagnétiques (30) incidents ainsi que l'angle d'incidence des rayons (30) incidents,
et une unité de mesure (3),
et un miroir de référence (21) étant présent, lequel est disposé sur le véhicule de combat (11),
et au moins un canon du véhicule de combat (11) étant présent, un miroir de visée (22) étant associé à chaque canon, lequel est orienté parallèlement à la direction de tir du canon,
**caractérisé en ce que**
l'unité de mesure est réalisée pour mesurer la position actuelle du dispositif dans l'espace,
**en ce qu'**un robot (1) est présent dans le système, lequel porte le dispositif (9) au niveau de l'un de ses bras,
**en ce que** le dispositif (9) est tout d'abord orienté par le biais du robot (1) sur le miroir de référence (21) et le robot obtient ainsi une position de référence dans l'espace,
et **en ce que** le miroir de référence (21) pointe en direction du robot (1),
le robot (1) étant ensuite déplacé de telle sorte que le dispositif (9) est orienté sur le miroir de visée (22) et la position du canon par rapport au miroir de référence (21) est ainsi déterminée.

2. Système selon la revendication 1, **caractérisé en ce que** les rayons électromagnétiques (30) émis ainsi que les incidents sont réalisés sous la forme de lumière dans la plage visible et/ou dans la plage infrarouge.

3. Système selon la revendication 1 ou 2, **caractérisé en ce que** le capteur dispose d'au moins une interface (18) par le biais de laquelle les données de mesure du capteur sont mises à disposition de manière à pouvoir être lues de manière analogique et/ou numérique.

4. Système selon l'une des revendications 1 à 3, **caractérisé en ce qu'**un télescope (8) est présent dans le dispositif, lequel est disposé parallèlement à l'axe de vision du collimateur (17) et projette le rayonnement électromagnétique incident sur une cible (6).

5. Système selon la revendication 4, **caractérisé en ce qu'**une source de chaleur est présente dans le dispositif (9), laquelle émet un rayonnement électromagnétique (32) qui est projeté par le télescope en parallèle avec les rayons (30) émis par le collimateur (17).

6. Système selon l'une des revendications 1 à 5, **caractérisé en ce qu'**un laser (20) est présent, lequel est disposé en parallèle de la direction d'émission du collimateur (17).

7. Système selon la revendication 6, **caractérisé en ce que** le miroir de visée (22) réfléchit dans la direction opposée par rapport à la direction de tir du canon.

8. Système selon l'une des revendications 1 à 7, **caractérisé en ce qu'**au moins un moyen de vision (10) est présent, lequel est disposé de telle sorte que la ligne de vision du moyen de vision (33) suit un tracé parallèle à au moins une direction de tir d'un canon.

9. Système selon la revendication 8, **caractérisé en ce qu'**une caméra (7) est présente, laquelle capture une image incidente en tant que projections des rayons (32) émis et la met à disposition d'un ordinateur (28) par le biais d'une interface (18) et/ou d'un convertisseur d'interface (13).

10. Procédé de détection et/ou d'ajustement des axes de vision d'un véhicule de combat (11) au moyen d'un système selon l'une des revendications 1 à 9,
**caractérisé en ce que** le dispositif (9) est tout d'abord orienté par le biais du robot (1) sur le miroir de référence (21) et le robot obtient ainsi une position de référence dans l'espace,
le robot (1) est ensuite déplacé de telle sorte que le dispositif (9) est orienté sur le miroir de visée (22) et une position du canon par rapport au miroir de référence (21) est ainsi déterminée.

11. Procédé selon la revendication 10, **caractérisé en ce qu'**un télescope (8) est présent dans le dispositif et le dispositif (9) est en plus déplacé parallèlement au plan vertical du miroir de référence (21) de telle sorte que les rayons (32) émis par le télescope (8) sont rayonnés dans l'axe de vision du moyen de vision (10) et la position du moyen de vision (10) par rapport au miroir de référence (21) est ainsi déterminée.

12. Procédé selon la revendication 10 ou 11, **caractérisé en ce que** les distances entre le dispositif (9) et le point de mesure respectif sont mesurées par un télémètre à laser.

13. Procédé selon l'une des revendications 10 à 12, **caractérisé en ce qu'**un déplacement à différentes positions du canon est effectué et la position du canon et du moyen de vision (10) dans chaque position est contrôlée par répétition du procédé.

14. Procédé selon l'une des revendications 10 à 13, **caractérisé en ce qu'**une précision d'ajustement du capteur par rapport au collimateur (17) et par rapport au télescope (8) est contrôlée en installant un laser d'ajustement sur le collimateur (17) ainsi que par réflexion sur un miroir d'ajustement.
